# EUROPEAN PATENT APPLICATION

(11) **EP 2 947 354 A1**
(43) Date of publication of application: **25.11.2015**
(21) Application number: 13871829.1
(22) Date of filing: 25.12.2013
(51) Int. Cl.: F16H 61/00

(54) **TRANSMISSION CONTROL DEVICE**

(30) Priority: 16.01.2013 JP 2013005704
(71) Applicant: Jatco Ltd, Fuji-shi, Shizuoka 417-8585 (JP)
(72) Inventor: TATEWAKI, Keichi, Fuji-shi Shizuoka 417-8585 (JP); WAKAYAMA, Hideshi, Fuji-shi Shizuoka 417-8585 (JP); WAKU, Kousuke, Fuji-shi Shizuoka 417-8585 (JP); AOYAMA, Noritaka, Fuji-shi Shizuoka 417-8585 (JP)
(74) Representative: Hoefer & Partner Patentanwälte mbB
(86) International application number: PCT/JP2013/084716
(87) International publication number: WO 2014/112308

(57) **Abstract**

In a transmission comprising a driving force source, an oil pressure source that generates oil pressure using a driving force from the driving force source, a first power transmission unit having a first mechanical biasing mechanism, and a second power transmission unit having a second mechanical biasing mechanism, opening/closing unit is provided in an oil passage through which the oil pressure is supplied to the second power transmission unit in order to close the oil passage until the oil pressure supplied to the first power transmission unit reaches or exceeds a predetermined value.

## Description

### TECHNICAL FIELD

This invention relates to a control apparatus for a transmission installed in a vehicle in which a driving force source is stopped and restarted.

### BACKGROUND ART

A technique for achieving an improvement in fuel efficiency by implementing a so-called coast stop, in which a driving force source such as an engine is stopped, is employed in a vehicle in a travel condition immediately before the vehicle comes to a stop.

During the coast stop, an oil pump driven by the driving force source is stopped, and therefore an oil pressure supplied to a transmission decreases. When the driving force source is restarted thereafter, the oil pump is also restarted, but a certain amount of time is required for the oil pressure to increase after starting to drive the oil pump. As a result, an acceleration delay and shock may be generated.

JP2000-035121A describes a control apparatus for a transmission that prevents a shock from being generated during acceleration following an engine restart operation by supplying oil pressure to a transmission rapidly or supplying the transmission with a higher oil pressure than normal during the restart operation so that a clutch is engaged rapidly.

### SUMMARY OF INVENTION

JP2000-035121A describes control implemented in a case where the transmission includes only one power transmitting mechanism (the clutch).

Here, when a restart operation is performed following a similar coast stop in a transmission provided with a plurality of power transmission mechanisms such as a combination of a continuously variable transmission mechanism and an auxiliary transmission mechanism, for example, oil pressure must be supplied respectively to the different power transmission mechanisms.

A method of supplying oil pressure to a plurality of power transmission mechanisms is not taken into consideration in the technique described in JP2000-035121A. Control is therefore required to prevent an acceleration delay when oil pressure is supplied to the plurality of power transmission mechanisms.

This invention has been designed in consideration of the problem described above, and an object thereof is to provide a control apparatus for a transmission, with which an acceleration delay is prevented during a restart operation performed after a driving force source is stopped by coast stop control.

According to an aspect of this invention, in a transmission comprising a driving force source, an oil pressure source that generates oil pressure using a driving force from the driving force source, a first power transmission unit that is connected to the driving force source such that a power transmission capacity thereof is adjusted in accordance with the oil pressure from the oil pressure source, and includes a first mechanical biasing mechanism that acts to reduce the power transmission capacity generated in accordance with the oil pressure from the oil pressure source, and a second power transmission unit that is connected in series to the driving force source and the first power transmission unit on a power transmission path such that a power transmission capacity thereof is adjusted in accordance with the oil pressure from the oil pressure source, and includes a second mechanical biasing mechanism that acts to increase the power transmission capacity generated in accordance with the oil pressure from the oil pressure source, opening/closing unit is provided in an oil passage through which the oil pressure is supplied to the second power transmission unit in order to close the oil passage until the oil pressure supplied to the first power transmission unit reaches or exceeds a predetermined value.

According to the aspect described above, the opening/closing unit is provided to close the oil passage through which the oil pressure is supplied to the second power transmission unit until the oil pressure supplied to the first power transmission unit reaches or exceeds the predetermined value, and therefore, when a restart operation is performed from a condition in which the oil pressure from the oil pressure source has decreased due to coast stop control or the like, for example, an oil pressure distribution is controlled such that the first transmission capacity exceeds the second transmission capacity. Accordingly, the first transmission capacity of the first power transmission unit can be increased early, and as a result, an acceleration delay can be prevented from occurring when the driving force source is restarted.

### BRIEF DESCRIPTION OF DRAWINGS

FIG. 1 is a schematic view showing a configuration of a vehicle installed with a continuously variable transmission according to an embodiment of this invention.
FIG. 2 is an illustrative view showing an example of a configuration of a transmission controller according to this embodiment of this invention.
FIG. 3 is an illustrative view showing an operation performed during vehicle reacceleration according to a comparative example of this invention.
FIG. 4 is an illustrative view showing a hydraulic circuit centering on an oil pressure control circuit according to this embodiment of this invention.
FIG. 5A is an illustrative view illustrating an operation of a switch valve according to this embodiment of this invention.
FIG. 5B is an illustrative view illustrating an operation of the switch valve according to this embodiment of this invention.
FIG. 6 is an illustrative view illustrating a relationship between an oil pressure and a transmission torque capacity according to this embodiment of this invention.
FIG. 7 is an illustrative view showing an operation performed during vehicle reacceleration according to this embodiment of this invention.
FIG. 8A is an illustrative view showing a modified example of the switch valve according to this embodiment of this invention.
FIG. 8B is an illustrative view showing a modified example of the switch valve according to this embodiment of this invention.

### DESCRIPTION OF EMBODIMENTS

An embodiment of this invention will be described below with reference to the attached figures.

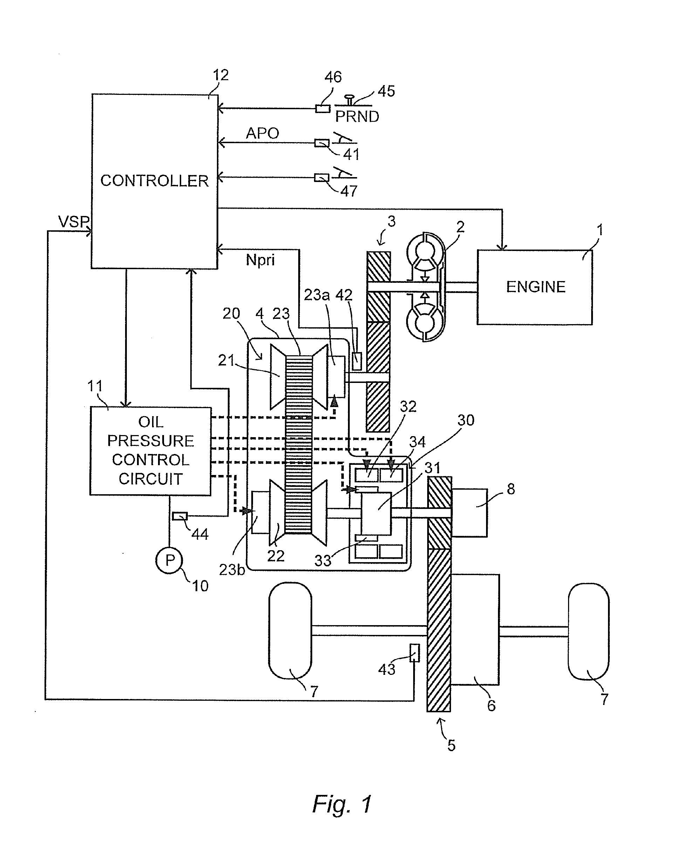

FIG. 1 is a schematic view showing a configuration of a vehicle installed with a continuously variable transmission according to a first embodiment of this invention. The vehicle comprises an engine 1 as a power source. Rotation output by the engine 1 is transmitted to a drive wheel 7 via a torque converter 2 having a lock-up clutch, a first gear train 3, a continuously variable transmission (referred to simply as a "transmission 4" hereafter), a second gear train 5, and a final reduction gear 6. The second gear train 5 is provided with a parking mechanism 8 that locks an output shaft of the transmission 4 mechanically to be incapable of rotation during parking.

Further, the vehicle is provided with an oil pump 10 that receives the rotation of the engine 1 so as to be driven by a part of the power of the engine 1. The transmission 4 is provided with an oil pressure control circuit 11 that regulates an oil pressure supplied from the oil pump 10 and supplies the regulated oil pressure to respective parts of the transmission 4, and a controller 12 that controls the oil pressure control circuit 11 and the engine 1.

The transmission 4 comprises a continuously variable transmission mechanism (referred to hereafter as a "variator 20"), and an auxiliary transmission mechanism 30 provided in series with the variator 20. "Provided in series" means that the variator 20 and the auxiliary transmission mechanism 30 are provided in series on a power transmission path. The auxiliary transmission mechanism 30 may be directly connected to an output shaft of the variator 20, as in this example, or may be connected via another gear change/power transmission mechanism (a gear train, for example).

The variator 20 is a belt type continuously variable transmission mechanism comprising a primary pulley 21, a secondary pulley 22, and a belt (a V belt) 23 wound around the pulleys 21, 22. The pulleys 21, 22 each comprise a fixed conical plate, a movable conical plate disposed such that a sheave surface thereof opposes the fixed conical plate, whereby a V groove is formed between the movable conical plate and the fixed conical plate, and a hydraulic cylinder 23a, 23b provided on a back surface of the movable conical plate in order to displace the movable conical plate in an axial direction. When oil pressure supplied to the hydraulic cylinders 23a, 23b is adjusted, a width of the V groove varies, leading to variation in a contact radius between the V belt 23 and the respective pulleys 21, 22, and as a result, a speed ratio vRatio of the variator 20 varies continuously.

The auxiliary transmission mechanism 30 is a two-forward speed, single-reverse speed gear type transmission mechanism. The auxiliary transmission mechanism 30 comprises a Ravigneaux type planetary gear mechanism 31 in which carriers of two planetary gears are connected to each other, and a plurality of frictional engagement elements (a Low brake 32, a High clutch 33, and a Rev brake 34) that are connected to a plurality of rotary elements constituting the Ravigneaux type planetary gear mechanism 31 in order to modify link conditions thereof. A gear position of the auxiliary transmission mechanism 30 is modified by adjusting oil pressure supplied to the respective frictional engagement elements 32 to 34 in order to modify engagement/ disengagement conditions of the frictional engagement elements 32 to 34.

For example, when the Low brake 32 is engaged and the High clutch 33 and Rev brake 34 are disengaged, the gear position of the auxiliary transmission mechanism 30 is set at a first speed. When the High clutch 33 is engaged and the Low brake 32 and Rev brake 34 are disengaged, the gear position of the auxiliary transmission mechanism 30 is set at a second speed having a smaller speed ratio than the first speed. Further, when the Rev brake 34 is engaged and the Low brake 32 and High clutch 33 are disengaged, the gear position of the auxiliary transmission mechanism 30 is set in reverse. In the following description, conditions in which the gear position of the auxiliary transmission mechanism 30 is set at the first speed and at the second speed will be expressed as "the transmission 4 is in a low speed mode" and "the transmission 4 is in a high speed mode", respectively.

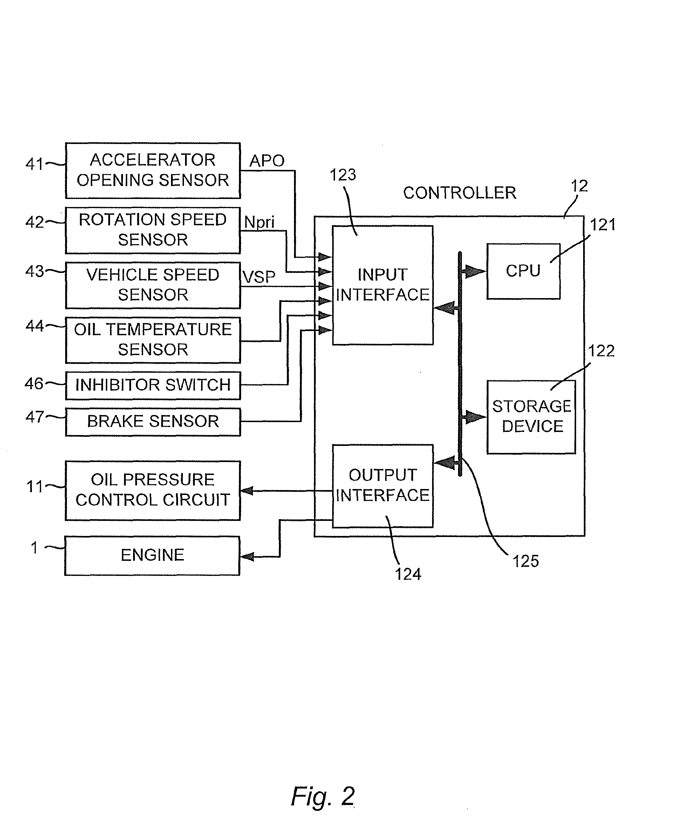

The controller 12 serves as control means for performing overall control of the engine 1 and the transmission 4, and as shown in FIG. 2, is constituted by a CPU 121, a storage apparatus 122 constituted by a RAM and a ROM, an input interface 123, an output interface 124, and a bus 125 that connects these components to each other.

An output signal from an accelerator opening sensor 41 that detects an opening of an accelerator pedal (referred to hereafter as an "accelerator opening APO"), an output signal from a rotation speed sensor 42 that detects an input rotation speed of the transmission 4 (= a rotation speed of the primary pulley 21, referred to hereafter as a "primary rotation speed Npri"), an output signal from a vehicle speed sensor 43 that detects a travel speed of the vehicle (referred to hereafter as a "vehicle speed VSP"), an output signal from an oil temperature sensor 44 that detects an oil temperature of the transmission 4, an output signal from an inhibitor switch 46 that detects a position of a select lever 45, an output signal from a brake sensor 47 that detects a depression amount of a brake pedal and an oil pressure of a brake, and so on are input into the input interface 123.

The storage apparatus 122 stores a control program for the engine 1, a shift control program for the transmission 4, and a shift map used by the shift control program. The CPU 121 generates a fuel injection signal, an ignition timing signal, a throttle opening signal, and a shift control signal by reading and executing the shift control program stored in the storage apparatus 122 and implementing various types of calculation processing on the various signals input via the input interface 123. The generated shift control signal is output to the oil pressure control circuit 11 via the output interface 124. Various values and calculation results used by the CPU 121 during the calculation processing are stored as appropriate in the storage apparatus 122.

The oil pressure control circuit 11 is constituted by a plurality of oil passages and a plurality of oil pressure control valves. The oil pressure control circuit 11 switches an oil pressure supply path by controlling the plurality of oil pressure control valves on the basis of the shift control signal from the controller 12, prepares required oil pressure from the oil pressure generated by the oil pump 10, and supplies the prepared oil pressure to respective sites of the transmission 4. The speed ratio vRatio of the variator 20 and the gear position of the auxiliary transmission mechanism 30 are thus modified, and as a result, a shift is performed in the transmission 4.

The controller 12 according to this embodiment suppresses an amount of consumed fuel by performing both idling stop control, in which the rotation of the engine 1 is stopped while the vehicle is stationary, and coast stop control, in which the rotation of the engine 1 is stopped while the vehicle continues to travel immediately before coming to a stop.

Coast stop control is control for suppressing an amount of consumed fuel by stopping the engine 1 automatically when the vehicle travels in a low vehicle speed region. Coast stop control is similar to fuel cut control executed when the accelerator is OFF in that a fuel supply to the engine 1 is stopped. However, fuel cut control is normally executed during comparatively high speed travel, and during the control the lock-up clutch of the torque converter 2 is engaged in order to secure an engine brake, whereas coast stop control is executed during comparatively low speed travel immediately before the vehicle comes to a stop, and during the control the rotation of the engine 1 is stopped with the lock-up clutch in a disengaged condition.

When executing coast stop control, the controller 12 first determines whether or not following conditions (a) to (d), for example, are established.
(a) A foot is removed from the accelerator pedal (accelerator opening APO = 0).
(b) The brake pedal is depressed (the brake sensor 47 is ON).
(c) The vehicle speed is equal to or lower than a predetermined low vehicle speed (15 km/h, for example).
(d) The lock-up clutch is disengaged.

In other words, these conditions are conditions for determining whether or not a driver intends to stop the vehicle.

When the coast stop conditions are established, the controller 12 stops the rotation of the engine 1 by stopping the fuel supply to the engine 1.

Next, an operation to restart the engine and reaccelerate the vehicle after stopping the engine by coast stop control will be described.

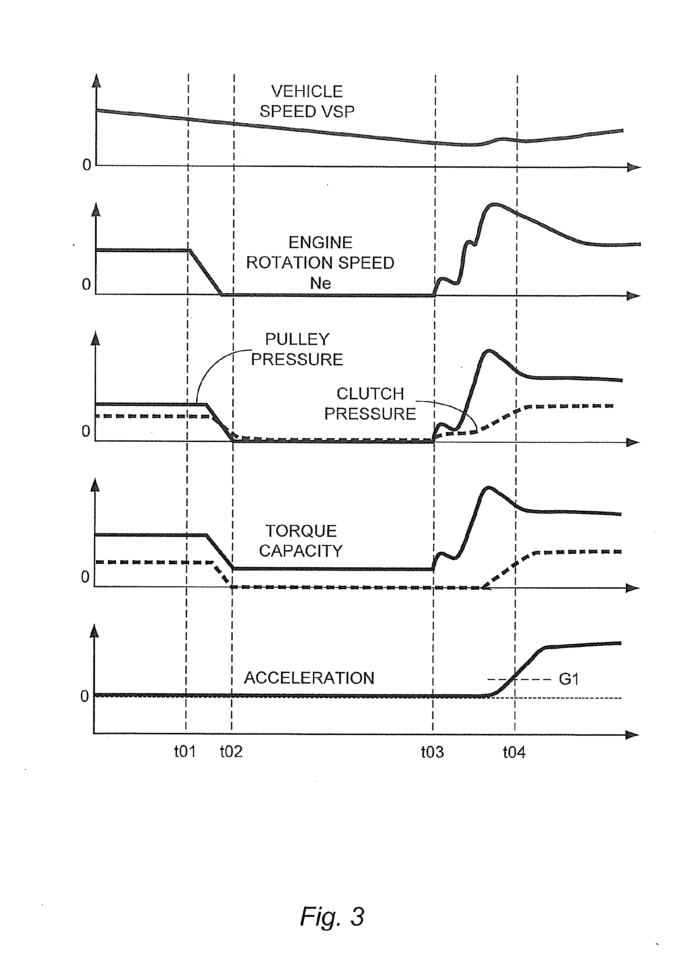

FIG. 3 is an illustrative view showing an operation performed during vehicle reacceleration according to a comparative example of this invention.

FIG. 3 shows an operation of a conventional vehicle in which a switch unit 250 of this invention, to be described below, is not used. FIG. 3 is a time chart showing, in descending order, the vehicle speed, an engine rotation speed Ne, a pulley pressure of the variator 20 (solid line) and a clutch pressure of the auxiliary transmission mechanism 30 (dotted line), a transmission torque capacity of the variator 20 (solid line) and a transmission torque capacity of the auxiliary transmission mechanism (dotted line), and an acceleration.

When the vehicle decelerates such that the aforesaid coast stop conditions are established (a timing t01), the controller 12 executes coast stop control by stopping the rotation of the engine 1. As a result, the engine 1 gradually stops rotating.

At this time, the oil pump 10 that generates oil pressure using the driving force of the engine 1 also gradually stops such that the oil pressure supplied to the oil pressure control circuit 11 from the oil pump 10 decreases. Accordingly, the oil pressure supplied to the variator 20 and the auxiliary transmission mechanism 30 falls to a substantially minimum value (a timing t02). During the coast stop control, the vehicle speed gradually decreases due to running resistance and the like.

When the driver issues a vehicle acceleration request thereafter by depressing the accelerator pedal or the like, for example, the controller 12 terminates the coast stop control and restarts the engine (a timing t03). As a result of this control, the engine 1 starts to rotate, whereby the engine rotation speed Ne increases.

As the engine rotation speed Ne increases, the oil pump 10 is driven, and as a result, oil pressure is generated. The generated oil pressure is supplied to the variator 20 and the auxiliary transmission mechanism 30 by the oil pressure control circuit 11. The oil pressure increases as the engine rotation speed increases. When the oil pressure is supplied to the variator 20 and the auxiliary transmission mechanism 30, the transmission torque capacities thereof increase such that the driving force of the engine 1 is transmitted to the vehicle wheels, and as a result, the vehicle starts to accelerate.

When the acceleration of the vehicle reaches a predetermined acceleration G1, the driver senses that the vehicle is accelerating (a timing t04). The predetermined acceleration G1 is a minimum acceleration at which a person obtains an acceleration feeling, and is set at 0.02 [G], for example.

At this time, as will be described below, the transmission torque capacity of the variator 20 increases early relative to the increasing oil pressure, whereas the transmission torque capacity of the auxiliary transmission mechanism 30 increases at a delay. The vehicle reaccelerates only after both the variator 20 and the auxiliary transmission mechanism 30 have started to transmit torque, and therefore reacceleration may be delayed by the delay in the increase of the transmission torque capacity of the auxiliary transmission mechanism 30, causing the driver to experience discomfort.

The variator 20 transmits the rotation of the engine 1 by clamping the V belt 23 when oil pressure is supplied to the hydraulic cylinders 21a, 22a provided respectively on the primary pulley 21 and the secondary pulley 22. The hydraulic cylinders 21a, 22a are provided with a second mechanical biasing mechanism constituted by a spring or the like that biases the V belt 23 in a clamping direction to prevent the V belt 23 from slipping when the oil pressure decreases.

When the engine 1 stops so that oil pressure is no longer supplied by the oil pump 10, the pulleys 21, 22 are biased in a direction for clamping the V belt 23 by the spring or the like. When the engine 1 is restarted such that the oil pressure increases, the pulleys are already biased against the V belt 23, and therefore the transmission torque capacity increases immediately in response to the increase in the oil pressure. In this embodiment, an oil pressure at which the transmission torque capacity starts to appear will be referred to as a "zero point".

The auxiliary transmission mechanism 30, on the other hand, transmits power when one of the plurality of frictional engagement elements (the Low brake 32, the High clutch 33, and the Rev brake 34) is engaged. To prevent the frictional engagement elements from dragging during disengagement, the frictional engagement elements are provided with a first mechanical biasing mechanism constituted by a return spring or the like that biases the frictional engagement elements to a disengagement side.

When the rotation of the engine 1 is stopped so that oil pressure is no longer supplied by the oil pump 10, the respective frictional engagement elements are biased in a disengagement direction by the return spring or the like. Here, when the engine 1 is restarted such that the oil pressure increases, the return spring is compressed against a biasing force of the return spring biased in the disengagement direction. The return spring then contacts facings of the frictional engagement elements, whereby the transmission torque capacity starts to appear. Hence, the zero point oil pressure is larger than that of the variator 20, and as a result, the transmission torque capacity increases at a delay relative to the transmission torque capacity of the variator 20.

As a result, a point at which torque is transmitted by the auxiliary transmission mechanism 30 after the engine 1 is restarted so that the vehicle starts to accelerate (i.e. the acceleration G reaches G1) is delayed by the delay in the increase of the transmission torque capacity of the frictional engagement elements.

Since the oil pressure (the zero point) at which the auxiliary transmission mechanism 30 starts to exhibit a transmission torque capacity is larger than that of the variator 20, as described above, the start of acceleration is delayed relative to the reacceleration request, and as a result, the driver may experience discomfort.

In this invention, therefore, the driver is prevented from experiencing discomfort by advancing the start of acceleration following termination of a coast stop using a configuration to be described below.

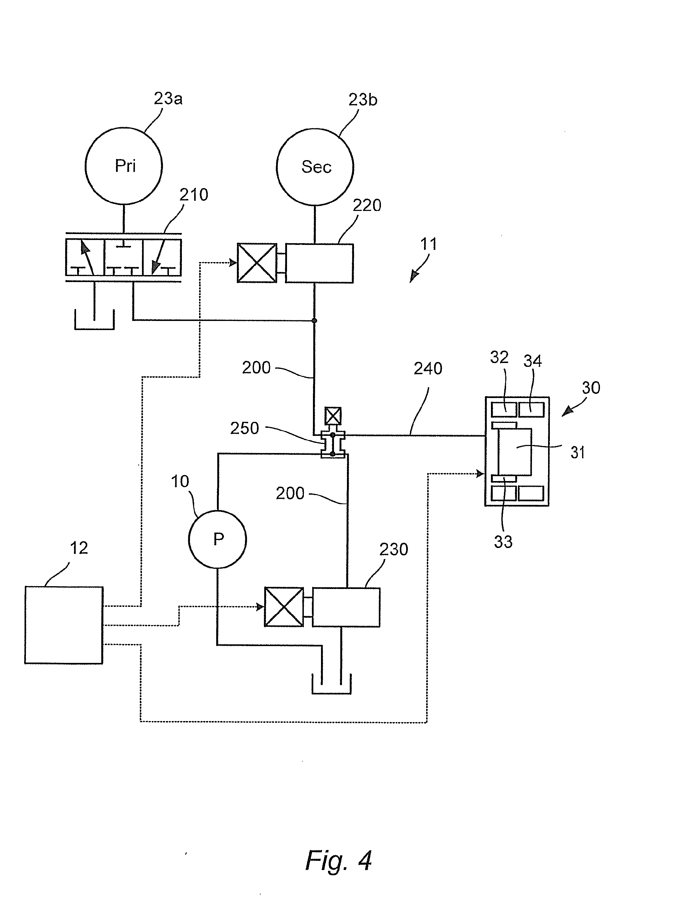

FIG. 4 is an illustrative view showing a hydraulic circuit centering on the oil pressure control circuit 11 according to this embodiment of this invention.

The oil pressure control circuit 11 receives a supply of oil pressure from the oil pump 10, regulates the oil pressure, and supplies the regulated oil pressure respectively to the variator 20, the torque converter 2, and the auxiliary transmission mechanism 30.

The oil pressure control circuit 11 includes a regulator valve 230, a secondary oil pressure control valve 220, a shift control valve 210, and the switch unit 250.

The regulator valve 230 is a control valve that regulates the oil pressure from the oil pump 10 to a predetermined line pressure, and supplies the line pressure to an oil passage 200.

The shift control valve 210 is a control valve that regulates a primary oil pressure supplied to the hydraulic cylinder 23a of the primary pulley 21 using the line pressure as a source pressure. The shift control valve 210 regulates the primary oil pressure relative to a secondary oil pressure in accordance with the movable conical plate of the primary pulley 21.

The switch unit 250 is provided between the oil passage 200 that supplies oil pressure to the variator 20 and an oil passage 240 that bifurcates from the oil passage 200 in order to supply oil pressure to the auxiliary transmission mechanism 30. The switch unit 250 modifies a distribution of the oil pressure supplied to the oil passage 200 and the oil passage 240.

Solenoids are provided respectively in the regulator valve 230 and the secondary oil pressure control valve 220. By controlling respective duty ratios of the solenoids in accordance with a command from the controller 12, the oil pressure generated by the respective valves is controlled.

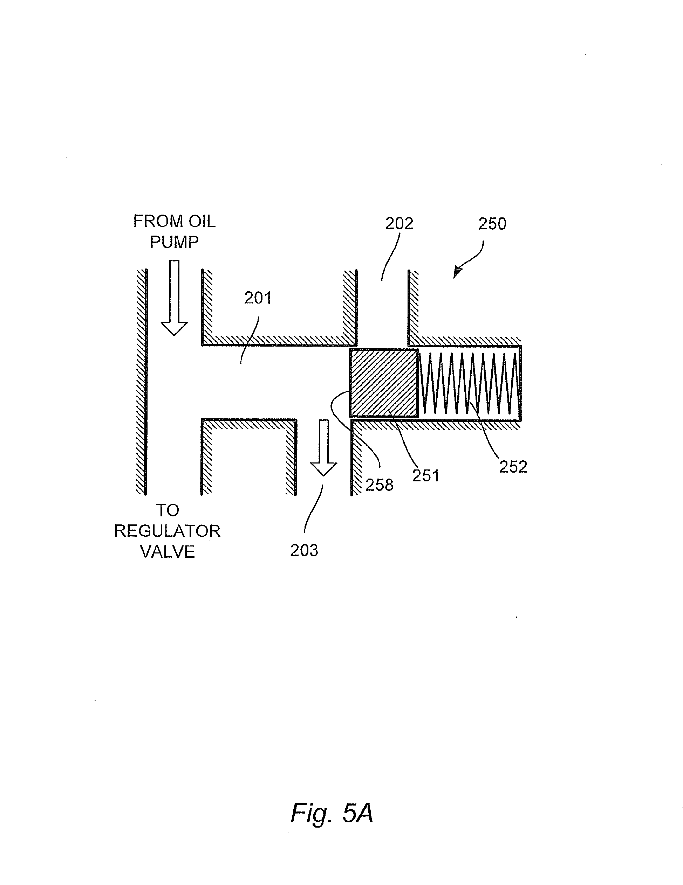

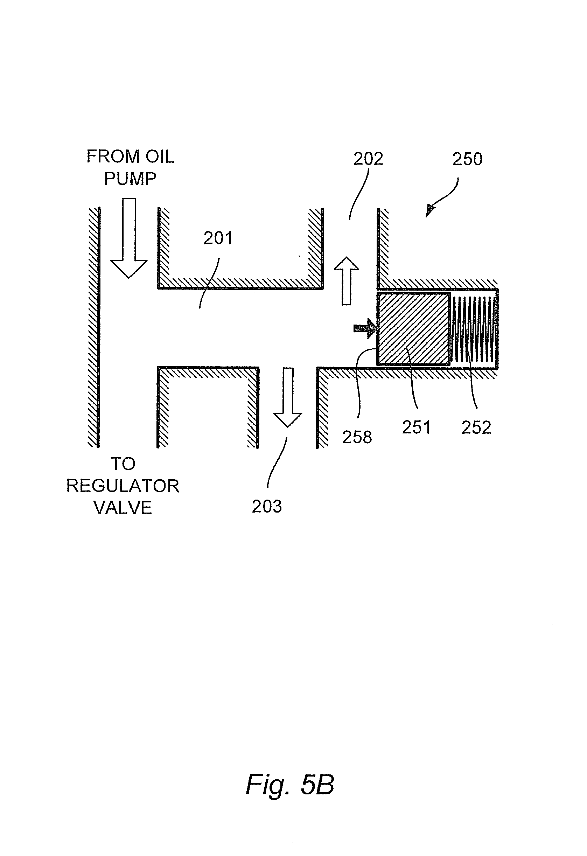

FIGS. 5A and 5B are illustrative views illustrating operations of the switch unit 250 according to this embodiment of this invention.

FIG. 5A shows a condition in which oil pressure is supplied only to the oil passage 240 that communicates with the auxiliary transmission mechanism 30. FIG. 5B shows a condition in which oil pressure is supplied to both the oil passage 240 that communicates with the auxiliary transmission mechanism 30 and the oil passage 200 that communicates with the variator 20.

The switch unit 250 is configured to switch between supplying the oil pressure supplied by the oil pump 10 and regulated to the line pressure by the regulator valve 230 to the oil passage 240 alone and supplying the oil pressure to both the oil passage 200 and the oil passage 240.

A first oil passage 201 that communicates with the oil pump 10 and the regulator valve so that oil pressure is supplied thereto, a second oil passage 202 that supplies oil pressure to the variator 20, and a third oil passage 203 that supplies oil pressure to the auxiliary transmission mechanism 30 are formed in the switch unit 250. The second oil passage communicates with the oil passage 200, and the third oil passage communicates with the oil passage 240.

A valve body 251 is provided in the switch unit 250, and the valve body 251 is biased by a spring 252 so as to close the second oil passage 202.

As shown in FIG. 5A, when the oil pressure is smaller than a predetermined pressure, the valve body 251 is caused to close the second oil passage 202 by a biasing force of the spring 252, while the third oil passage 203 and the first oil passage 201 communicate with each other. In this condition, the oil pressure from the oil pump 10 is supplied only to the third oil passage 203, whereupon the oil pressure is supplied to the auxiliary transmission mechanism 30 through the oil passage 240.

Here, when the oil pressure from the first oil passage 201 increases, the oil pressure acts on a pressure receiving surface 258 of the valve body 251, the pressure receiving surface 258 facing the oil passage 201, and therefore the valve body 251 is pushed in a direction against the biasing force of the spring 252. As shown in FIG. 5B, when the oil pressure from the first oil passage 201 increases to a predetermined oil pressure, the valve body 251 is moved by the oil pressure against the biasing force of the spring 252 so as to open the second oil passage 202, and as a result, the first oil passage 201 communicates with the second oil passage 202. In this condition, the oil pressure from the oil pump 10 is supplied to the second oil passage 202 and the third oil passage 203, whereupon the oil pressure is supplied to the variator through the oil passage 200 and to the auxiliary transmission mechanism 30 through the oil passage 240. Hence, the valve body 251 constitutes opening/closing unit for closing off the first oil passage 201 from the second oil passage, and connecting the first oil passage 201 to the second oil passage 202 when the oil pressure increases to the predetermined oil pressure.

The predetermined oil pressure at which the switch unit 250 switches the oil passage is determined as follows.

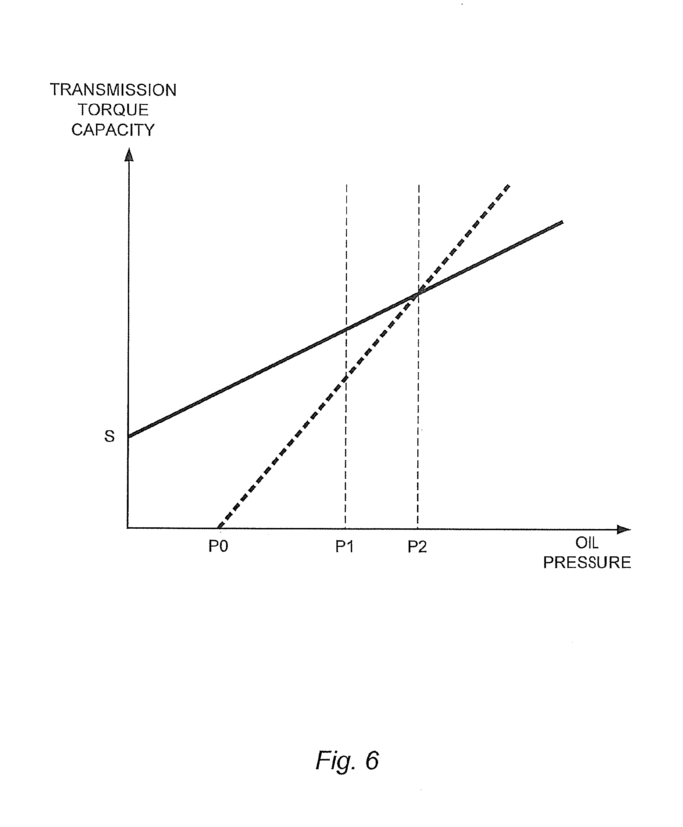

FIG. 6 is an illustrative view illustrating respective relationships between the oil pressures and the transmission torque capacities of the variator 20 and the auxiliary transmission mechanism 30 according to this embodiment of this invention.

In FIG. 6, a solid line denotes a relationship in the variator 20 between the oil pressure and the transmission torque capacity (a second transmission capacity) transmitted by the V belt 23 that is clamped when oil pressure is supplied to the hydraulic cylinders 23a, 23b provided respectively in the primary pulley 21 and the secondary pulley 22.

Further, a dotted line denotes a relationship in the auxiliary transmission mechanism 30 between the oil pressure and the transmission torque capacity (a first transmission capacity) transmitted when oil pressure is supplied to one of the power-transmitting frictional engagement elements (the Low brake 32, the High clutch 33, and the Rev brake 34) such that the frictional engagement element is engaged.

As described above, the second mechanical biasing mechanism that biases the V belt 23 in the clamping direction is provided in the variator 20 to prevent the V belt 23 from slipping when the oil pressure decreases. As a result of the second mechanical biasing mechanism, the variator 20 exhibits a transmission torque capacity (S) even when no oil pressure is supplied thereto.

On the other hand, the frictional engagement elements of the auxiliary transmission mechanism 30 are provided with the first mechanical biasing mechanism, which is constituted by a return spring or the like that biases the frictional engagement elements to the disengagement side to prevent the frictional engagement elements from dragging during disengagement. For the frictional engagement elements to exhibit a transmission torque capacity, therefore, an oil pressure (P0) must be supplied thereto against the biasing force of the first mechanical biasing mechanism.

Further, the facings (friction material) of the frictional engagement elements exhibit a different transmission torque capacity characteristic to the pulleys 21, 22 and the V belt 23 in relation to an increase in the oil pressure. In the frictional engagement elements, a frictional force increases in response to an increase in the oil pressure, leading to an increase in the transmission torque capacity, whereas in the pulleys 21, 22 and the V belt 23, metal contacts metal, and therefore a large frictional force is not generated. As a result, the transmission torque capacity of the pulleys 21, 22 and the V belt 23 increases more gently than that of the frictional engagement elements in response to an increase in the oil pressure. Furthermore, the facings of the frictional engagement elements are typically formed from multiple plates, and therefore greater frictional force is generated by the frictional engagement elements than by the pulleys 21, 22 and the V belt 23.

Here, a case in which the oil pressure increases when the engine is restarted from a coast stop condition, as described above, will be considered.

In a region where the oil pressure is lower than P2, the transmission torque capacity of the auxiliary transmission mechanism 30 is smaller than that of the variator 20.

When the oil pressure increases from zero in the region where the oil pressure is lower than P2, the auxiliary transmission mechanism 30 starts to exhibit a transmission torque capacity (i.e. the oil pressure equals or exceeds P0) after the return spring of the frictional engagement element is compressed. When the oil pressure reaches P2, the transmission torque capacity of the frictional engagement element becomes substantially equal to the transmission torque capacity of the variator 20, and thereafter, the transmission torque capacity of the frictional engagement element exceeds the transmission torque capacity of the variator 20 as the oil pressure increases.

In other words, in the region where the oil pressure is lower than P2, the auxiliary transmission mechanism 30 requires a larger oil pressure than the variator 20 to increase the transmission torque capacity. Therefore, during the process in which the oil pressure gradually increases from zero to P2 when the engine is restarted from the coast stop condition, a timing at which the auxiliary transmission mechanism 30 starts to exhibit a transmission torque capacity is delayed relative to a timing at which the variator 20 starts to exhibit a transmission torque capacity.

Accordingly, actual acceleration is delayed relative to the vehicle reacceleration request, and as a result, the driver experiences discomfort. Further, when the driver issues a large acceleration request such that the rotation speed of the engine 1 increases rapidly, the frictional engagement element of the auxiliary transmission mechanism 30 may be engaged rapidly after starting to exhibit a transmission torque capacity, and as a result, engagement shock may be generated, causing the driver to experience discomfort.

Hence, in this embodiment of this invention, the switch unit 250 is provided in the oil pressure control circuit 11, as described above, and in a region where the oil pressure is lower than a predetermined oil pressure, the switch unit 250 is configured to supply oil pressure only to the auxiliary transmission mechanism 30.

An oil pressure P1 that is smaller than the oil pressure P2 by a predetermined amount, for example, is set as the predetermined oil pressure, and the switch unit 250 is configured to open the second oil passage 202 when the oil pressure exceeds the predetermined oil pressure P1. The predetermined oil pressure P1 is set at a value equal to or lower than a minimum pressure of the normal line pressure controlled by the regulator valve 230, for example.

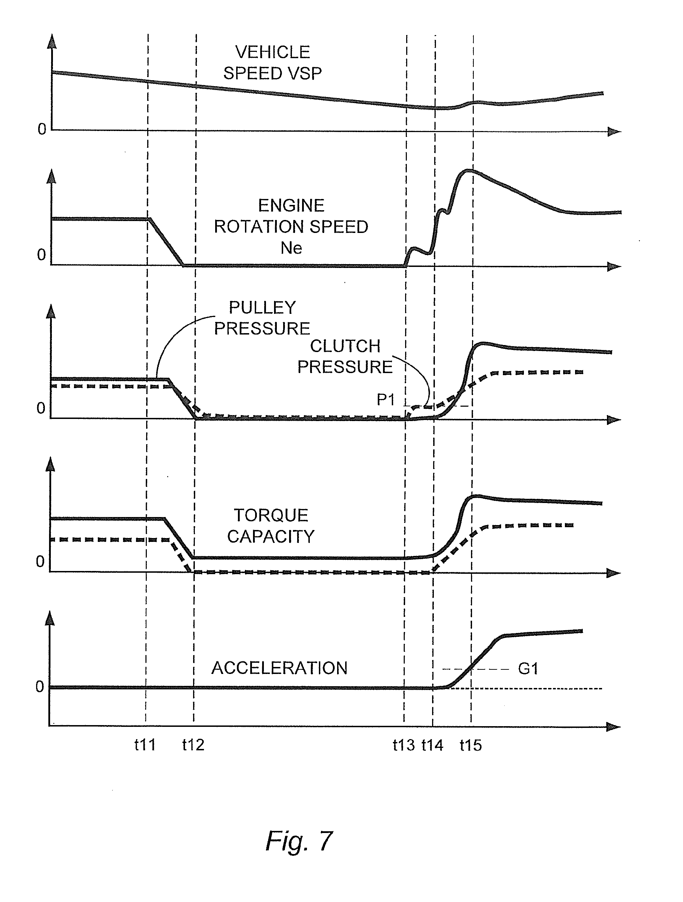

FIG. 7 is an illustrative view illustrating an operation performed during vehicle reacceleration according to this embodiment of this invention.

FIG. 7 is a time chart showing, in descending order, the vehicle speed, the engine rotation speed Ne, the pulley pressure of the variator 20 and the clutch pressure of the auxiliary transmission mechanism 30, the respective transmission torque capacities of the variator 20 and the auxiliary transmission mechanism, and the acceleration.

When the vehicle decelerates such that the aforesaid coast stop conditions are established (a timing t11), the controller 12 executes coast stop control by stopping the rotation of the engine 1. Accordingly, the oil pump 10 that generates oil pressure using the driving force of the engine 1 also gradually stops such that the oil pressure from the oil pump 10 is no longer supplied to the oil pressure control circuit 11.

As a result, the oil pressure supplied to the variator 20 and the auxiliary transmission mechanism 30 reaches a substantially minimum value (a timing t12). During the coast stop control, the vehicle speed gradually decreases.

When the driver issues a vehicle acceleration request thereafter by depressing the accelerator pedal or the like, for example, the controller 12 terminates the coast stop control and restarts the engine (a timing t13). As a result of this control, the engine 1 starts to rotate, whereby the engine rotation speed increases.

When, at this time, the oil pressure is lower than P1 due to the action of the switch unit 250 described above, the second oil passage 202 is closed by the valve body 251 and the third oil passage 203 is open, and therefore the oil pressure from the oil pump 10 is supplied only to the frictional engagement elements of the auxiliary transmission mechanism 30 through the oil passage 240. As a result, the frictional engagement elements start to exhibit a transmission torque capacity.

At this time, all of the oil pressure generated by the oil pump 10 is supplied to the auxiliary transmission mechanism 30, and therefore the frictional engagement elements can start to exhibit a transmission torque capacity earlier than in a conventional configuration in which oil pressure is supplied to both the variator 20 and the auxiliary transmission mechanism 30.

When the oil pressure from the oil pump 10 exceeds P1 thereafter, the valve body 251 moves against the biasing force of the spring 252 so as to open the second oil passage 202 (a timing t14).

Accordingly, the first oil passage 201 communicates with the second oil passage 202 such that oil pressure is also supplied to the variator 20. In the variator 20, the transmission torque capacity of the pulleys 21, 22 and the V belt 23 increases such that torque is transmitted, and as a result, the acceleration of the vehicle increases (a timing t15).

Hence, in this embodiment of this invention, the switch unit 250 is provided to supply oil pressure preferentially to the frictional engagement elements of the auxiliary transmission mechanism 30 immediately after the engine 1 is restarted following a reduction in the oil pressure caused by coast stop control. Therefore, the transmission torque capacity can be increased first in the auxiliary transmission mechanism 30, in which the transmission torque capacity starts to appear at a later timing than the variator 20 in response to an increase in the oil pressure, and as a result, a delay in the acceleration feeling of the vehicle following a reacceleration request can be prevented.

Further, the switch unit 250 operates mechanically using the oil pressure and a spring force, and does not employ a solenoid or the like, for example. Therefore opening/closing operation abnormalities caused by electrical faults can be prevented.

Next, a modified example of this embodiment of this invention will be described.

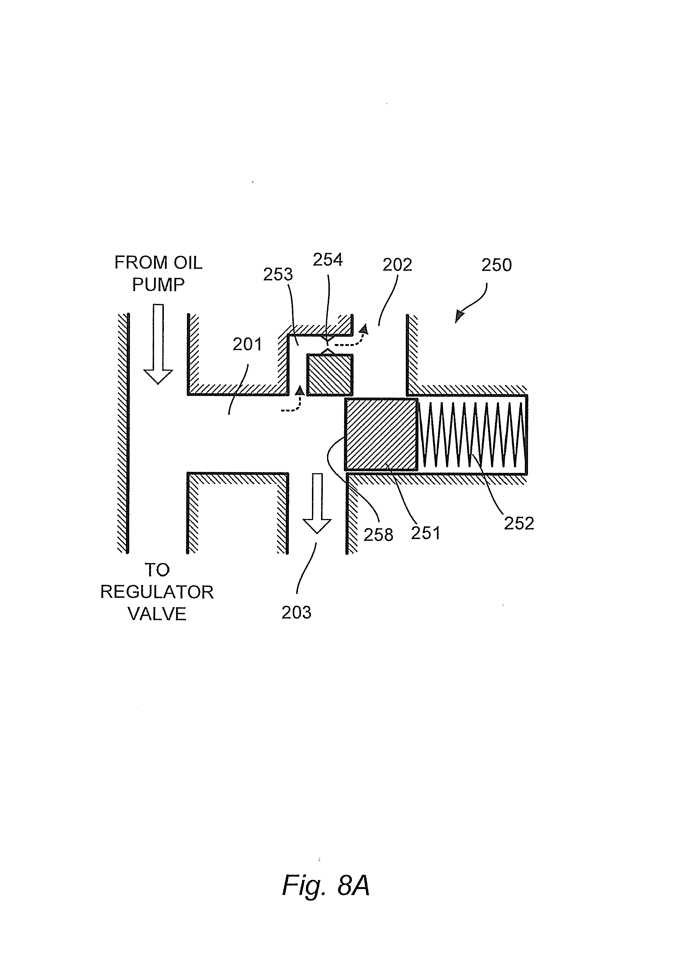

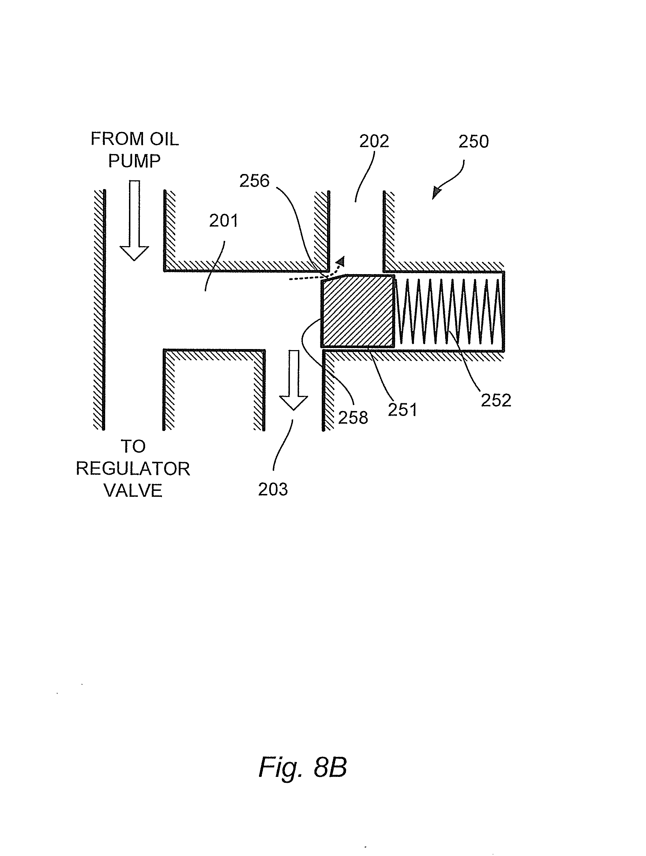

FIGS. 8A and 8B are illustrative views illustrating a modified example of the switch unit 250 according to this embodiment of this invention.

FIG. 8A shows a modified example of the switch unit 250 in which the first oil passage 201 is connected to the second oil passage 202 by a bypass oil passage 253. An orifice 254 is provided in the bypass oil passage 253. The orifice 254 is formed such that the oil pressure flows through the bypass oil passage 253 at a smaller flow rate than a flow rate generated when the first oil passage 201 is connected to the second oil passage 202.

As described above, the switch unit 250 is configured such that the valve body 251 is operated by the oil pressure and the spring 252. When an abnormality occurs in the valve body 251 so that the valve body 251 becomes inoperative, oil pressure is no longer supplied to the second oil passage 202, and as a result, the vehicle cannot start.

Hence, in the modified example shown in FIG. 8A, the oil pressure supplied from the oil pump 10 flows through the second oil passage 202 via the bypass oil passage 253. With this configuration, oil pressure can be supplied to the variator 20 even when the valve body 251 becomes inoperative while closing the second oil passage 202.

Further, the orifice 254 is formed in the bypass oil passage 253. In other words, the oil pressure can flow from the first oil passage 201 into the second oil passage 202 via the bypass oil passage 253, but when the engine 1 is restarted following coast stop control such that the oil pressure increases, the supply of oil pressure from the second oil passage 202 to the variator 20 is restricted by the orifice 254. As a result, the control valve 25 can supply oil pressure preferentially to the frictional engagement elements of the auxiliary transmission mechanism 30 immediately after the engine 1 is restarted following a reduction in the oil pressure caused by the coast stop control, as described above.

FIG. 8B is an illustrative view showing another modified example of the switch unit 250 according to this embodiment of this invention.

In the modified example shown in FIG. 8B, a cutout portion 256 is formed in the valve body 251 so that even when the second oil passage 202 is closed by the valve body 251, the oil pressure supplied from the oil pump 10 can flow through the second oil passage 202. With this configuration, oil pressure can be supplied to the variator 20 even when the valve body 251 becomes inoperative while closing the second oil passage 202.

The cutout portion 256 performs a similar action to the orifice 254 shown in FIG. 8A. In other words, the cutout portion 256 is formed such that oil pressure can flow through the bypass oil passage 253 at a smaller flow rate than the flow rate generated when the first oil passage 201 is connected to the second oil passage 202. Oil pressure can flow from the first oil passage 201 into the second oil passage 202 through the cutout portion 256, but when the engine 1 is restarted following the coast stop control described above such that the oil pressure increases, the supply of oil pressure from the second oil passage 202 to the variator 20 is restricted. As a result, the control valve 25 can supply oil pressure preferentially to the frictional engagement elements of the auxiliary transmission mechanism 30 immediately after the engine 1 is restarted following a reduction in the oil pressure caused by the coast stop control, as described above.

In this embodiment, the switch unit 250 is configured such that the valve body 251 is biased by the spring 252, as described above. The switch unit 250 is not limited to this configuration, however, and the valve body 251 may be opened and closed electrically by a solenoid or the like that operates on the basis of the oil pressure in the first oil passage 201. By opening and closing the valve body 251 electrically using a solenoid or the like, opening and closing of the valve body 251 can be controlled accurately on the basis of the magnitude of the oil pressure, and as a result, an acceleration delay can be prevented.

As described above, this embodiment of this invention is applied to a control apparatus for a transmission comprising the controller, which functions as a coast stop control unit that performs coast stop control to stop the engine 1 serving as a driving force source while the vehicle travels, the oil pump 10, which serves as an oil pressure source that generates oil pressure using the driving force of the engine 1, the auxiliary transmission mechanism 30, which serves as a first power transmission unit having a first transmission capacity for transmitting and outputting power from the driving force source, the first transmission capacity being controlled by the oil pressure from the oil pressure source, the variator 20, which serves as a second power transmission unit having a second transmission capacity for transmitting and outputting the power from the driving force source, the second transmission capacity being controlled by the oil pressure from the oil pressure source, and the switch unit 250 that modifies the distribution of the oil pressure supplied to the first power transmission unit and the second power transmission unit.

The auxiliary transmission mechanism 30 includes the first mechanical biasing mechanism, which is constituted by a return spring or the like that acts to reduce the first transmission capacity by biasing the frictional engagement elements to the disengagement side. Further, the variator 20 includes the second mechanical biasing mechanism, which is constituted by a spring or the like that acts to increase the second transmission capacity by biasing the pulleys 21, 22 in the direction for clamping the V belt 23.

When the oil pressure supplied to the auxiliary transmission mechanism 30 is smaller than a predetermined value (P1) during an operation to restart the engine 1 after the engine 1 has been stopped, the switch unit 250 serving as the opening/closing unit modifies the distribution of the oil pressure so that the first transmission capacity of the auxiliary transmission mechanism 30 exceeds the second transmission capacity of the variator 20. When the oil pressure supplied to the auxiliary transmission mechanism 30 equals or exceeds the predetermined value (P1), the switch unit 250 increases the second transmission capacity of the variator 20 by modifying the distribution of the oil pressure so that the oil pressure supplied to the variator 20 increases.

By performing this control in a condition where the oil pressure has decreased after stopping the engine 1, oil pressure can be supplied preferentially to the auxiliary transmission mechanism 30, which is biased by the return spring such that the transmission torque capacity thereof is reduced, and accordingly, the first transmission capacity of the auxiliary transmission mechanism 30 can be increased early. As a result, an acceleration delay can be prevented from occurring when the driving force source is restarted.

In the transmission, the auxiliary transmission mechanism that serves as the first power transmission unit and transmits power using the frictional engagement elements is connected in series to the continuously variable transmission (the variator 20) that serves as the second power transmission unit and comprises the set of pulleys and the power transmission belt that transmits power while wrapped around the set of pulleys.

The variator 20 includes the second mechanical biasing mechanism that prevents the V belt 23 from slipping when the oil pressure decreases. The frictional engagement elements of the auxiliary transmission mechanism 30, on the other hand, are provided with the first mechanical biasing mechanism that biases the frictional engagement elements to the disengagement side to prevent the frictional engagement elements from dragging during disengagement. For the auxiliary transmission mechanism 30 to exhibit a transmission torque capacity, therefore, oil pressure must be supplied against the biasing force of the first mechanical biasing mechanism. In this configuration, by supplying oil pressure preferentially to the auxiliary transmission mechanism 30 first when the engine is restarted, the first transmission capacity of the auxiliary transmission mechanism 30 can be increased earlier than in a case where equal oil pressure is supplied simultaneously to the auxiliary transmission mechanism 30 and the variator 20, and as a result, an acceleration delay can be prevented from occurring when the driving force source is restarted.

Furthermore, the switch unit includes the valve body 251 provided to be capable of connecting and disconnecting the oil pressure supply from the oil pump 10 to the variator 20, and the spring 252 serving as a biasing unit that biases the valve body 251 in a direction for cutting off the oil pressure supply from the oil pump 10 to the variator 20, and when the oil pressure supplied from the oil pump 10 reaches the predetermined oil pressure (P1), the valve body 252 moves so that the oil pressure from the oil pump 10 is supplied to the variator 20. Hence, the switch unit 250 is configured to operate mechanically using the oil pressure in the spring, and is therefore small and less likely to break down. As a result, an acceleration delay can be prevented from occurring when the driving force source is restarted while suppressing manufacturing costs.

Moreover, the switch unit 250 includes the bypass oil passage 253 that supplies oil pressure even when the oil pressure supply from the oil pump 10 to the variator 20 is restricted. Therefore, oil pressure can be supplied to the variator 20 so that the vehicle can be started even when an operational abnormality occurs in the switch unit 250.

Further, the orifice 254 is formed in the bypass oil passage 253, and therefore the oil pressure supply from the bypass oil passage 253 to the variator 20 can be restricted so that the first transmission capacity of the auxiliary transmission mechanism 30 increases early. As a result, an acceleration delay can be prevented from occurring when the driving force source is restarted.

Furthermore, the cutout portion is formed in the valve body 251 to supply oil pressure even when the oil pressure supply from the oil pump 10 to the variator 20 is blocked. Therefore, oil pressure can be supplied to the variator 20 so that the vehicle can be started even when an operational abnormality occurs in the switch unit 250.

An embodiment of the present invention was described above, but the above embodiment is merely one example of an application of the present invention, and the technical scope of the present invention is not limited to the specific configurations of the above embodiment.

For example, in the above embodiment, oil pressure is supplied preferentially to the frictional engagement elements of the auxiliary transmission mechanism 30 immediately after the engine 1 is restarted following the coast stop control. The invention is not limited to this example, however, and may also be applied to a coast stop, an idling stop, or a case in which a switch is performed from a non-travel range to a travel range in a situation where the drive source is not automatically stopped, for example. In other words, by supplying oil pressure preferentially to the frictional engagement elements of the auxiliary transmission mechanism 30 when a switch is performed from the non-travel range (N or P, for example) to the travel range (D or R, for example), an acceleration delay can be prevented from occurring when the driving force source is restarted.

Furthermore, in the above embodiment, the switch unit 250 is provided in a branch part where the variator 20 and the auxiliary transmission mechanism 30 respectively bifurcate from the oil pump 10 serving as the oil pressure source. The invention is not limited thereto, however, and the switch unit 250 may be provided in the oil passage 200 further downstream toward the variator 20 side than the branch part, for example, instead of being provided in the branch part. In this case, the switch unit 250 can perform the control described above by performing opening and closing operations relative to the primary pulley hydraulic cylinder 23a and the secondary pulley hydraulic cylinder 23b.

Moreover, in the above embodiment, a configuration in which the auxiliary transmission mechanism 30 is connected in series to the rear of the variator 20 was described, but the invention is not limited thereto, and instead, for example, the auxiliary transmission mechanism may be provided at the front of the variator 20. Furthermore, a forward clutch, for example, that connects and disconnects power transmission using a frictional engagement element may be provided instead of the stepped auxiliary transmission mechanism 30.

Further, in the above embodiment, a belt type continuously variable transmission mechanism is provided as the variator 20, but instead, the variator 20 may be a continuously variable transmission mechanism in which a chain is wrapped around the pulleys 21, 22 instead of the V belt 23. Alternatively, the variator 20 may be a toroidal continuously variable transmission mechanism in which a tiltable power roller is disposed between an input disc and an output disc.

This application claims priority to Japanese Patent Application No. 2013-5704 filed with the Japan Patent Office on January 16, 2013, the entire contents of which are incorporated herein by reference.

## Claims

1. A control apparatus for a transmission comprising:
a driving force source;
an oil pressure source adapted to generate oil pressure using a driving force from the driving force source;
a first power transmission unit adapted to be connected to the driving force source such that a power transmission capacity thereof is adjusted in accordance with the oil pressure from the oil pressure source, and include a first mechanical biasing mechanism that acts to reduce the power transmission capacity generated in accordance with the oil pressure from the oil pressure source; and
a second power transmission unit adapted to be connected in series to the driving force source and the first power transmission unit on a power transmission path such that a power transmission capacity thereof is adjusted in accordance with the oil pressure from the oil pressure source, and include a second mechanical biasing mechanism that acts to increase the power transmission capacity generated in accordance with the oil pressure from the oil pressure source,
wherein opening/closing means is provided in an oil passage through which the oil pressure is supplied to the second power transmission unit in order to close the oil passage until the oil pressure supplied to the first power transmission unit reaches or exceeds a predetermined value.

2. The control apparatus for a transmission as defined in Claim 1, wherein the first power transmission unit is a gear type transmission mechanism that transmits power using a frictional engagement element, and
the second power transmission unit comprises a set of pulleys and a power transmission belt that transmits power while wrapped around the set of pulleys.

3. The control apparatus for a transmission as defined in Claim 1 or Claim 2, wherein the opening/closing means comprises:
a valve body formed with a pressure receiving surface adapted to be biased in a direction for opening the oil passage upon reception of the oil pressure supplied to the first power transmission unit; and
a biasing unit adapted to bias the valve body in a direction for closing the oil passage.

4. The control apparatus for a transmission as defined in any one of Claim 1 to Claim 3, wherein the opening/ closing means is provided with a bypass oil passage through which the oil pressure can flow at a smaller flow rate than a flow rate generated when the opening/ closing means is in an open condition.

5. The control apparatus for a transmission as defined in Claim 4, wherein the bypass oil passage is formed in the valve body.
